# DEMANDE DE BREVET EUROPEEN

(11) **EP 4 206 719 A1**
(43) Date de publication de la demande: **05.07.2023**
(21) Numéro de dépôt: 22215164.9
(22) Date de dépôt: 20.12.2022
(51) Int. Cl.: G01S 5/02, G01S 5/00, H04W 12/104, H04L 9/08, H04L 9/40

(54) **PROCÉDÉ DE VALIDATION D'UN POSITIONNEMENT D'UN TERMINAL UTILISATEUR DANS UN RÉSEAU RADIO CELLULAIRE 4G**

(30) Priorité: 29.12.2021 FR 2114615
(71) Demandeur: THALES, 92400 Courbevoie (FR)
(72) Inventeur: PANAITOPOL, Dorin, 92622 GENNEVILLIERS CEDEX (FR); DELAVEAU, François, 92622 GENNEVILLIERS CEDEX (FR)
(74) Mandataire: Atout PI Laplace

(57) **Abrégé**

L'invention concerne un système de communication 4G comprenant un réseau radio cellulaire 4G, chaque cellule dudit réseau radio cellulaire 4G comprenant au moins une station de base chaque station de base étant adaptée pour communiquer avec un terminal utilisateur (UE) compatible 4G. Le système de communication comprend un satellite (Sat), ledit satellite (Sat) étant adaptée pour échanger des trames de service (T_{S}) avec le terminal utilisateur (UE), une passerelle (GW), ladite passerelle (GW) étant adaptée pour échanger des trames lien feeder (T_{LF}) avec le satellite (Sat), un réseau central 4G (CN), ledit réseau central 4G (CN) étant relié à la passerelle (GW), ledit réseau central (CN) étant apte à communiquer avec les stations de base. Le terminal utilisateur (UE) est apte à communiquer à un instant donné avec plusieurs stations de base, dites stations de base de proximité (eNB1,..., eNBi, ..., eNBn).

## Description

### Domaine technique

La présente invention concerne la mise en oeuvre de communications 4G entre un terminal (dit « User Equipement » en anglais ou UE) utilisant et un réseau central (dit « Core Network » en anglais ou CN) via au moins un satellite de communication.

### Technique antérieure

Les systèmes satellites pour les terminaux utilisateurs sont aujourd'hui propriétaires et peu ou pas interopérables ni entre les différents systèmes satellites, ni avec les réseaux mobiles terrestres. Les terminaux utilisateurs et les équipements réseaux existants coutent chers et sont spécifiques. Cela les limite à des marchés de niche et ne leur permet pas de créer une solution pour le marché grand public.

L'organisme de standardisation des réseaux mobiles 3GPP (pour « 3rd Génération Partnership Project » en anglais) tente de répondre à ce problème en proposant des modifications au standard 4G, dit quatrième génération de réseau mobile, pour le rendre compatible d'un point de vue satellite (NTN ou « Non-Terrestrial Network » en anglais). Des modifications sont alors à prévoir sur l'ensemble des composants du système. Il est connu qu'un système de communication pour une communication 4G comprend un réseau central et au moins une station de base appartenant à une cellule 4G. Dans un système par satellite, le système de communication comprend également au moins une passerelle disposée entre le satellite et le réseau central. Le système de communication permet ainsi une communication 4G entre des terminaux utilisateurs et ledit réseau central.

Le terminal utilisateur en communication avec le réseau central est présent dans une cellule du réseau de cellules 4G. Afin d'assurer certaines fonctionnalités, comme, par exemple, des fonctionnalités de facturation, il est nécessaire d'avoir une bonne connaissance de la position du terminal utilisateur dans le réseau de cellules 4G, à tout instant.

Il est connu d'utiliser au niveau du terminal utilisateur, les coordonnées d'un système de positionnement par satellites dit coordonnées GNSS pour la Géolocalisation et la Navigation par un Système de Satellites. Par GNSS, on comprend tout système ou combinaison de systèmes de navigation par satellite comme, par exemple, GPS, GALILEO, BEIDOU, GLONASS, EGNOS, NavIC, QZSS (ou Michibiki), etc. Le terminal utilisateur fait ainsi remonter ses coordonnées GNSS vers le réseau central. Le terminal utilisateur utilise également ses coordonnées/informations GNSS pour se synchroniser avec le réseau satellite LTE ou 4G NTN (pour « Non-Terrestrial Networks » en anglais), par exemple pour réaliser une pré-compensation Doppler et/ou une procédure de Timing Advance.

Cependant, le terminal utilisateur peut facilement modifier de manière trompeuse sa position géographique, c'est-à-dire la mesure effectuée, ou le rapport de mesure GNSS envoyé vers le réseau central. Dès lors, un réseau 4G ne peut pas considérer la position GNSS qui lui a été transmise par le terminal utilisateur comme totalement fiable. Ce réseau 4G doit donc avoir un mécanisme de vérification/validation par le réseau. Ce mécanisme de vérification est nécessaire pour connaître la position du terminal utilisateur en vue d'appliquer la bonne politique de routage et le bon tarif. Ce mécanisme est également nécessaire pour permettre des interceptions légales (Lawful Interception en anglais) en vue de pouvoir intercepter le terminal utilisateur par une autorité compétente du pays dans lequel se situe ledit terminal utilisateur. Enfin un tel mécanisme de vérification permet de refuser l'accès par satellite, par exemple dans les pays qui ne sont pas desservis par l'opérateur satellite. Lorsque l'on parle d'une « mesure » ou d'un « rapport de mesure » envoyé par un équipement/UE/STA, on considère des mesures de type RSSI, RSRQ, RSRP, i.e. un niveau de puissance ou un niveau SNR/SINR(Signal to Noise plus Interférence Ratio) reçu d'un AP/BS/gNB/eNB etc.

Pour réaliser un mécanisme de vérification au niveau du réseau 4G, il est connu d'utiliser des techniques de positionnement classiques, telles que des techniques de positionnement utilisées pour les réseaux terrestres. Il est ainsi possible d'utiliser des signaux de positionnement ou tout autre type de signal pilote. Cependant, le problème est que les cellules satellite sont très grandes et les zones géographiques ne sont pas forcément couvertes par plusieurs cellules à la fois comme dans un réseau radio cellulaire terrestre. Il est également possible d'introduire de nouveaux pilotes sur les liens de service (dit « Service Link » en anglais ou SL), notamment des signaux de référence pour le positionnement (dit « Positioning Reference Signals » en anglais ou PRS) et les rapports de mesure des terminaux utilisateurs UEs sur les PRS, ou une utilisation de pilotes SRS (dit « Sounding Reference Signais » en anglais) émis par l' UE vers le satellite et/ou le réseau d'accès satellite. Cependant ces solutions sont difficiles à mettre en oeuvre, surtout s'il y a un seul satellite disponible et/ou si une seule cellule NTN couvre la zone desservie. De plus, il n'est pas possible d'utiliser des méthodes classiques de localisation sauf à requérir un niveau de puissance reçu par plusieurs satellites 4G, si plusieurs de ces satellites couvrent la même zone. Enfin, une telle solution ne résout pas les problématiques de validation pour un déploiement géostationnaire avec des cellules/spots d'environ e.g. 300-500 km de largeur au sol. Il existe également d'autres solutions connues pour des communications par satellite, telles que des solutions propriétaires e.g. Iridium avec une implémentation « Earth Moving Cell ». Pour ce type d'implémentation, les beams/les cellules/les spots au sol se déplacent avec le satellite, les terminaux restent relativement peu de temps dans la cellule (surtout dans les constellations de basse altitude avec des satellites qui se déplacent à haute vitesse) et c'est possible d'avoir une estimation de la position du terminal au moment où le terminal sort de la cellule/se connecte à une autre cellule, même si la solution n'est pas très précise. Cependant, dans le cas des satellites LEO/MEO, il est également possible d'utiliser une antenne active sur le satellite pour couvrir une zone unique au sol (« Earth Fixed Cell » par opposition à « Earth Moving Cell »), mais les cellules/spots ont toujours une largeur importante d'environ 50-90 km et la précision du positionnement reste très réduite. Aucune solution n'est disponible aujourd'hui pour des technologies 4G/LTE NTN de type « Earth Fixed Cell ».

Sont également connus les protocoles LPP pour « LTE Positioning Protocol » et LPPa pour « LTE Positioning Protocol Annex » ou « LTE Positionning Protocol A » décrits dans les TS 36.355 et TS 36.455.

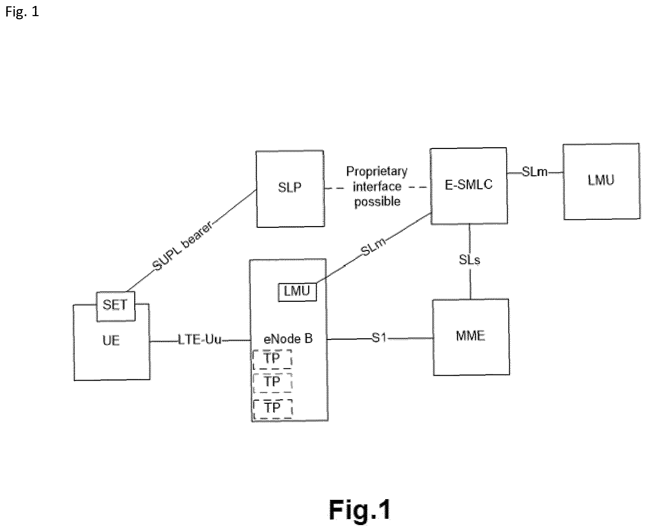

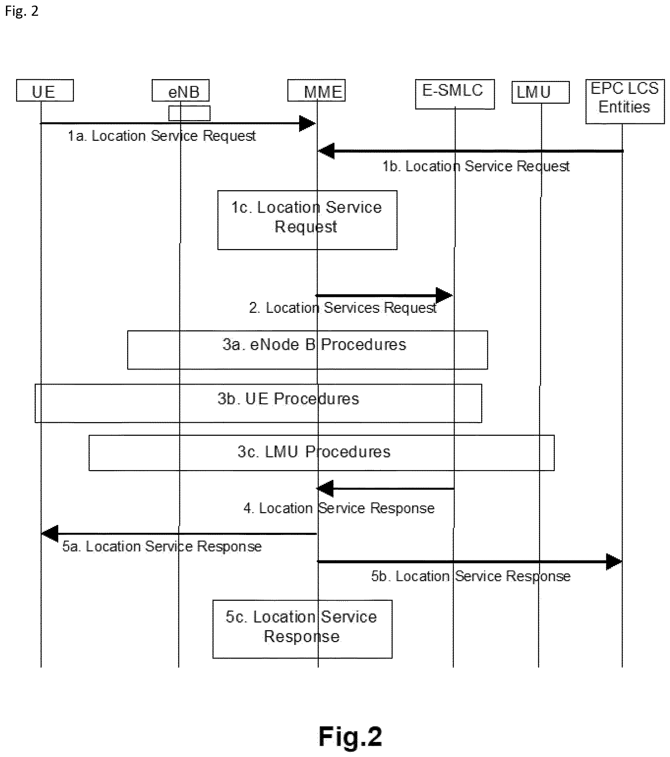

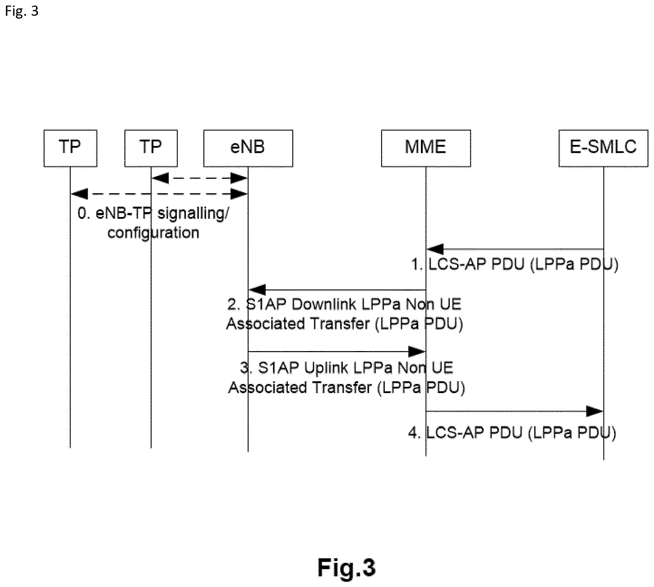

Le fonctionnement de tout ou partie de ces protocoles est notamment illustré aux figures 1 à 3.

Il existe donc un besoin d'améliorer le mécanisme de vérification des coordonnées GNSS du terminal utilisateur dans un réseau 4G tout en minimisant les impacts sur les différents équipements utilisés.

### Exposé de l'invention

La présente invention vise à remédier au moins en partie à ce besoin.

Plus particulièrement, l'invention vise à améliorer la détermination de la position d'un terminal utilisateur dans un réseau radio cellulaire 4G.

Pour cela un premier objet de l'invention concerne un procédé de validation d'un positionnement d'un terminal utilisateur compatible 4G dans un réseau de cellules 4G. Le terminal utilisateur est adapté pour échanger des trames de service avec un satellite. Le satellite est adapté pour échanger des trames lien feeder avec une passerelle. La passerelle est reliée à un réseau central 4G, chaque cellule 4G du réseau 4G comprenant au moins une station de base, chaque station de base étant apte à communiquer avec le réseau central 4G. Le terminal utilisateur est apte à communiquer à un instant donné avec plusieurs stations de base des cellules 4G, dites stations de base de proximité. Le procédé de validation comprend une étape de détermination de premières données de positionnement du terminal utilisateur, lesdites premières données de positionnement étant une position GNSS du terminal utilisateur, lesdites premières données de positionnement étant envoyées par le terminal utilisateur au réseau central 4G via le satellite. Le procédé de validation comprend une étape d'envoi par le terminal utilisateur de secondes données de positionnement du terminal utilisateur vers le réseau central 4G, lesdites secondes données de positionnement étant basées sur tout ou partie des mesures de canaux de propagation réalisées par le terminal utilisateur sur les stations de base de proximité, ladite étape d'envoi étant réalisée via le satellite. Le procédé de validation comprend une étape d'envoi par les stations de base de proximité de troisièmes données de positionnement du terminal utilisateur vers le réseau central 4G, lesdites troisièmes données de positionnement étant basées sur des mesures de canaux de propagation réalisées par les stations de base de proximité sur le terminal utilisateur, ladite étape d'envoi étant réalisée sans passer par le satellite. Enfin, le procédé comprend une étape de comparaison, dans le réseau central 4G, des secondes données de positionnement avec les troisièmes données de positionnement, les premières données de positionnement du terminal utilisateur étant validées si les secondes données de positionnement sont compatibles avec les troisièmes données de positionnement.

Le réseau central 4G compare ainsi les secondes données de positionnement avec les troisièmes données de positionnement et décide si le terminal utilisateur peut être accepté dans le réseau 4G ou non.

Dans un mode de réalisation particulier, les secondes données de positionnement sont des mesures des canaux de propagation par le terminal utilisateur UE sur les émissions d'une ou plusieurs stations de base de proximité.

Dans un mode de réalisation particulier, les secondes données de positionnement sont des clés secrètes particulières du terminal utilisateur, lesdites clés secrètes particulières étant calculées à partir des canaux de propagation mesurés par le terminal utilisateur sur les émissions des stations de base de proximité.

Dans un mode de réalisation particulier, les secondes données de positionnement sont une clé secrète globale calculée à partir des clés secrètes particulières.

La clé secrète globale correspond à une empreinte électromagnétique. Une fois que l'authentification du positionnement du terminal utilisateur est réalisée, le terminal utilisateur et/ou le satellite et/ou la passerelle peuvent utiliser la clé secrète globale pour sécuriser le lien.

Dans un mode de réalisation particulier, les troisièmes données de positionnement sont les mesures des canaux de propagation mesurés par les stations de base de proximité sur les émissions du terminal utilisateur.

Dans un mode de réalisation particulier, les troisièmes données de positionnement sont des clés secrètes particulières des stations de base de proximité, lesdites clés secrètes étant calculées à partir des mesures canaux desdites stations de proximité sur les émissions du terminal utilisateur.

Dans un mode de réalisation particulier, les troisièmes données de positionnement sont une clé secrète globale de station de base calculées à partir des clés secrètes particulières.

Dans un mode de réalisation particulier, les clés secrètes sont ajoutées sur des protocoles LPP et LPPa dans leur transmission au réseau central 4G.

Dans un mode de réalisation particulier, le procédé comprend initialement une étape d'authentification du terminal utilisateur dans le réseau central 4G.

Un autre objet de l'invention concerne un système de communication 4G comprenant :
- un réseau de cellules 4G, chaque cellule dudit réseau de cellules 4G comprenant une station de base, chaque station de base étant adaptée pour communiquer avec un terminal utilisateur compatible 4G ;
- un satellite, ledit satellite étant adaptée pour échanger des trames de service avec le terminal utilisateur ;
- une passerelle, ladite passerelle étant adaptée pour échanger des trames lien feeder avec le satellite ;
- un réseau central 4G, ledit réseau central étant relié à la passerelle, ledit réseau central étant apte à communiquer avec les stations de base ;
- ledit terminal utilisateur étant apte à communiquer à un instant donné avec plusieurs stations de base, dites stations de base de proximité ;
- ledit système de communication 4G étant apte à mettre en oeuvre les étapes d'un procédé de validation d'un positionnement du terminal utilisateur dans le réseau de cellules 4G, selon l'invention.

Un autre objet de l'invention concerne un procédé d'échange de premières données de positionnement et de secondes données de positionnement destiné à être mis en oeuvre par un terminal utilisateur compatible 4G pour une validation d'un positionnement dudit terminal utilisateur dans un réseau de cellules 4G, ledit terminal utilisateur étant adapté pour échanger des trames de service avec un satellite, ledit satellite étant adapté pour échanger des trames lien feeder avec une passerelle, ladite passerelle étant reliée à un réseau central 4G, chaque cellule 4G du réseau de cellules 4G comprenant une station de base, chaque station de base étant apte à communiquer avec le réseau central 4G, ledit terminal utilisateur étant apte à communiquer à un instant donné avec plusieurs stations de base, dites stations de base de proximité. Le procédé d'échange de données comprend :
- une étape de détermination des premières données de positionnement du terminal utilisateur, lesdites premières données de positionnement étant une position GNSS du terminal utilisateur, lesdites premières données de positionnement étant envoyées par le terminal utilisateur au réseau central 4G via le satellite ;
- une étape d'envoi par le terminal utilisateur des secondes données de positionnement du terminal utilisateur vers le réseau central 4G, lesdites secondes données de positionnement étant basées sur tout ou partie des mesures de canaux de propagation réalisées par le terminal utilisateur sur les stations de base de proximité, ladite étape d'envoi étant réalisée via le satellite, lesdites secondes données de positionnement étant aptes à être comparées à des troisièmes données de positionnement, lesdites troisièmes données de positionnement étant adaptées pour être envoyées par les stations de base de proximité sans passer par le satellite, lesdites troisièmes données de positionnement étant basées sur des mesures canaux de propagation réalisées par les stations de base de proximité sur le terminal utilisateur, les premières données de positionnement du terminal utilisateur étant validées si les secondes données de positionnement sont compatibles avec les troisièmes données de positionnement.

Un autre objet de l'invention concerne un terminal utilisateur compatible 4G, ledit terminal utilisateur étant apte à mettre en oeuvre les étapes d'un procédé d'échange de premières données de positionnement et de secondes données de positionnement selon l'invention pour une validation d'un positionnement dudit terminal utilisateur dans un réseau de cellules 4G.

Un autre objet de l'invention concerne un produit programme d'ordinateur comportant des instructions de programme exploitables par un terminal utilisateur compatible 4G selon l'invention, qui lorsqu'elles sont exécutées ou interprétées par ledit terminal utilisateur déclenchent la mise en oeuvre d'un procédé d'échange de première données de positionnement et de secondes données de positionnement selon l'invention pour une validation d'un positionnement dudit terminal utilisateur dans un réseau de cellules 4G.

Un autre objet de l'invention concerne un procédé d'échanges de troisièmes données de positionnement destiné à être mis en oeuvre par une station de base pour une validation d'un positionnement d'un terminal utilisateur compatible 4G dans un réseau de cellules 4G, ladite station de base, dite station de base de proximité étant apte à communiquer à un instant donné avec ledit terminal utilisateur, ledit terminal utilisateur étant adapté pour échanger des trames de service avec un satellite, ledit satellite étant adapté pour échanger des trames lien feeder avec une passerelle, ladite passerelle étant reliée à un réseau central 4G, la station de base étant apte à communiquer avec ledit réseau central 4G. Le procédé d'échange de données comprend :
- une étape d'envoi de troisièmes données partielles de positionnement vers le réseau central 4G sans passer par le satellite, lesdites troisièmes données de positionnement étant basées sur des mesures canaux de propagation réalisées par la station de base, lesdites troisièmes données partielles de positionnement étant adaptées pour être combinées avec des troisièmes données partielles de positionnement basées sur des mesures de canaux de propagation réalisées par d'autres stations de base de proximité en communication avec le terminal utilisateur à l'instant donné pour former des troisièmes données de positionnement, lesdites troisièmes données de positionnement étant adaptées pour être comparées avec des secondes données de positionnement, lesdites secondes données de positionnement ayant été envoyées par le terminal utilisateur vers le réseau central 4G via le satellite, lesdites secondes données de positionnement étant basées sur les mesures de canaux de propagation réalisées par le terminal utilisateur sur les stations de base de proximité, des premières données de positionnement du terminal utilisateur dans le réseau de cellules 4G étant validées si les secondes données de positionnement sont compatibles avec les troisièmes données de positionnement, lesdites premières données de positionnement étant une position GNSS du terminal utilisateur, lesdites premières données de positionnement étant envoyées par le terminal utilisateur au réseau central 4G via le satellite.

Un autre objet de l'invention concerne une station de base apte à mettre en oeuvre les étapes d'un procédé d'échanges de troisièmes données de positionnement selon l'invention pour une validation d'un positionnement d'un terminal utilisateur dans un réseau de cellules 4G.

Un autre objet de l'invention concerne un programme d'ordinateur comportant des instructions exploitables par une station de base selon l'invention, qui lorsqu'elles sont exécutées ou interprétées par ladite station de base déclenchent la mise en oeuvre d'un procédé d'échanges de troisièmes données de positionnement selon l'invention pour une validation d'un positionnement d'un terminal utilisateur dans un réseau de cellules 4G.

Un autre objet de l'invention concerne un procédé de traitement de premières données de positionnement, de secondes données de positionnement et de troisième données de positionnement d'un terminal utilisateur compatible 4G dans un réseau de cellules 4G, ledit terminal utilisateur étant adapté pour échanger des trames de service avec un satellite, ledit satellite étant adapté pour échanger des trames lien feeder avec une passerelle, ladite passerelle étant reliée à un réseau central 4G, chaque cellule 4G du réseau de cellules 4G comprenant une station de base, chaque station de base étant apte à communiquer avec le réseau central 4G, ledit terminal utilisateur étant apte à communiquer à un instant donné avec plusieurs stations de base des cellules 4G, dites stations de base de proximité. Le procédé de traitement comprend :
- une étape de réception des premières données de positionnement du terminal utilisateur, lesdites premières données de positionnement étant une position GNSS du terminal utilisateur, lesdites premières données de positionnement étant envoyées par le terminal utilisateur via le satellite ;
- une étape de réception de secondes données de positionnement du terminal utilisateur, lesdites secondes données de positionnement étant basées sur tout ou partie des mesures de canaux de propagation réalisées par le terminal utilisateur sur les stations de base de proximité, lesdites secondes données de positionnement étant envoyées par le terminal utilisateur via le satellite ;
- une étape de réception de troisièmes données de positionnement, lesdites troisièmes données de positionnement étant basées sur des mesures de canaux de propagation réalisée par les stations de base de proximité sur le terminal utilisateur, ladite étape d'envoi étant réalisée par les stations de base de proximité sans passer par le satellite ;
- une étape de comparaison des secondes données de positionnement avec les troisièmes données de positionnement, les premières données de positionnement du terminal utilisateur étant validées si les secondes données de positionnement sont compatibles avec les troisièmes données de positionnement.

Un autre objet de l'invention concerne un réseau central 4G apte à mettre en oeuvre les étapes d'un procédé de traitement de données de positionnement selon l'invention pour une validation d'un positionnement d'un terminal utilisateur dans un réseau de cellules 4G.

Un autre objet de l'invention concerne un programme d'ordinateur comportant des instructions de programme exploitables par un réseau d'accès 4G selon l'invention, qui lorsqu'elles sont exécutées ou interprétées par ledit réseau d'accès 4G déclenchent la mise en oeuvre d'un procédé de traitement de données de positionnement selon l'invention pour une validation d'un positionnement d'un terminal utilisateur dans un réseau de cellules 4G.

La présente invention sera mieux comprise à la lecture de la description détaillée de modes de réalisation pris à titre d'exemples nullement limitatifs et illustrés par les dessins annexés sur lesquels :
[Fig 1] la figure 1 illustre une architecture de positionnement général d'un terminal utilisateur applicable à E-UTRAN (TS 36.305) selon l'art antérieur ;
[Fig 2] la figure 2 illustre un support de service de localisation par E-UTRAN selon l'art antérieur ;
[Fig 3] la figure 3 illustre un transfert LPPA PDU entre un E-SMLC et un eNB pour obtenir de données eNB selon l'art antérieur ;
[Fig 4] la figure 4 illustre un système de communication 4G selon l'invention ;
[Fig 5] la figure 5 illustre les étapes d'un procédé de validation d'un positionnement d'un terminal utilisateur mis en oeuvre par le système de communication 4G de la figure 4 ;
[Fig.6] la figure 6 détaille une information SKG nécessaire avec une quantification sur 8 bits/sous-porteuse ou 8 bits/Sub-carrier SC selon l'invention ;
[Fig. 7] la figure 7 détaille les différentes étapes d'un support de service de localisation par E-UTRAN selon l'invention ;
[Fig. 8] la figure 8 détaille les différentes étapes d'un transfert PDU LPPa entre un E-SMLC et un eNB pour obtenir des données eNB selon l'invention ;
[Fig.9] la figure 9 détaille les différentes étapes pour supporter l'émission en broadcast de données d'assistance.

L'invention n'est pas limitée aux modes de réalisation et variantes présentées et d'autres modes de réalisation et variantes apparaîtront clairement à l'homme du métier.

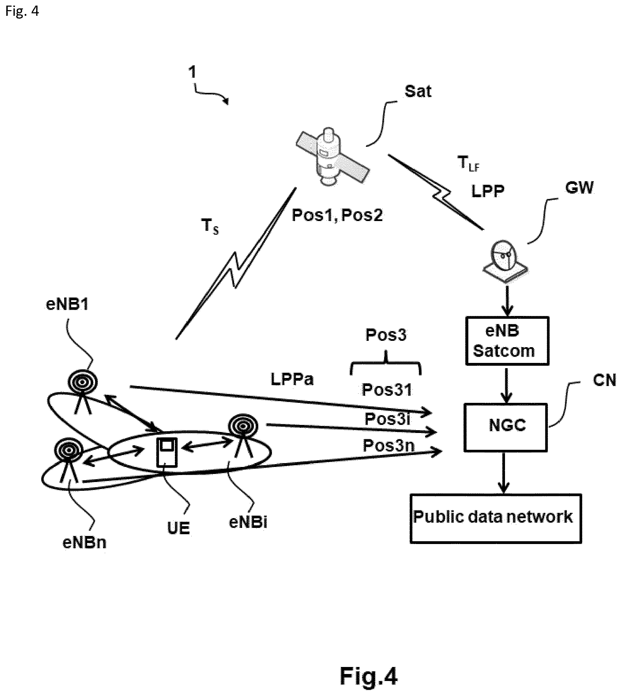

La figure 4 illustre un système de communication 4G 1 pour une communication 4G avec un terminal utilisateur UE.

Le système de communication 4G comprend :
- un réseau de cellules 4G ;
- des stations de base de proximité (eNB1 ,..., eNBi, ..., eNBn) ;
- un satellite Sat ;
- une passerelle GW ;
- une station de base réseau eNB Satcom ;
- un réseau central 4G CN.

Le réseau de cellules 4G comprend une pluralité de cellules 4G définissant des zones de couverture où la connexion avec le terminal utilisateur UE est possible. Chaque cellule 4G comprend au moins une station de base adaptée pour émettre et recevoir de données sur ladite cellule 4G. Lorsque le terminal utilisateur UE se déplace dans le réseau de cellules 4G, il est en connexion, à un instant donné, avec une pluralité de stations de base de différentes cellules 4G dites stations de base de proximité eNB1,..., eNBi, ..., eNBn.

On notera que le terminal utilisateur UE est compatible 4G et il possède une fonctionnalité NTN (pour « Non-Terrestrial Network » en anglais). En variante, le terminal utilisateur UE est un dispositif loT ou un dispositif eMTC.

Le système de communication 1 comprend également le satellite Sat. Ce satellite Sat est adapté pour échanger des trames de service T_{S} avec le terminal utilisateur UE. Le satellite Sat est également adapté pour échanger des trames lien feeder T_{LF} avec la passerelle GW. Le satellite SAT est, par exemple, un satellite défilant sur une orbite non-géostationnaire dit satellite NGSO (pour « Non-Geostationary Orbit » en anglais), tel qu'un satellite LEO (pour « Low-Earth Orbit » en anglais), vLEO (pour « very Low-Earth Orbit » en anglais) ou MEO (pour « Medium-Earth Orbit » en anglais). Le point de référence de ce satellite se déplace par rapport aux stations de base de proximité eNB1,..., eNBi, ..., eNBn et ce délai est grandement variable, par exemple il peut être compris entre 2 et 5 ms avec une vitesse de variation pouvant atteindre jusqu'à 25ppm dans le cas où le satellite est sur une orbite à 600 km (LEO@600km).

La passerelle GW permet de rendre possible une communication entre un environnement filaire et l'environnement radio associé au satellite SAT. Ainsi, la passerelle GW est adaptée pour communiquer avec le réseau central 4G CN. Dans le mode de réalisation de la figure 4, la passerelle GW communique avec le réseau central 4G via la station de base réseau eNB Satcom.

Le réseau central 4G CN comprend ici un module NGC (pour « Next Génération Core » en anglais) et qui est connecté avec un réseau de données publiques public data network (PDN). Le réseau PDN est, par exemple, internet ou tout autre service offert derrière le réseau central CN.

Le terminal utilisateur UE est adapté pour déterminer des premières données de positionnement Pos1 via une communication avec un ou plusieurs satellites Sat. Ces premières données de positionnement Pos1 correspondent à une position GNSS du terminal utilisateur UE. Les premières données de positionnement Pos1 sont transmises au réseau central 4G via le satellite Sat.

Le terminal utilisateur UE est également adapté pour déterminer des secondes données de positionnement Pos2. Ces secondes données de positionnement Pos2 sont basées sur tout ou partie de mesures de canaux de propagation réalisées sur les stations de base de proximité eNB1,..., eNBi, ..., eNBn. Le terminal utilisateur UE est ainsi capable de communiquer avec les différentes stations de bases par différents canaux radio i. L'information CHi provenant d'un canal radio i peut être la réponse impulsionnelle du canal i ou les valeurs de cette réponse pour certains multi-trajets seulement, la réponse en fréquence du canal i ou les valeurs de cette réponse pour certaines sous-porteuses seulement. L'information transmise peut l'être d'une manière périodique, apériodique, évènementielle, etc.

Chaque réponse impulsionnelle ou réponse en fréquence du canal radio peut être évaluée sur une configuration de bande donnée en rapport avec la technologie GSM,CDMA, HSDPA, HSUPA, LTE, WiMax, WiFi, 802.11 ou autre (pas seulement 4G) en cas de connexion avec le 4G CN.

Il est également possible de considérer un fonctionnement avec une architecture/scenario non-roaming ou roaming.

Chaque réponse en fréquence du canal radio (mono-trajet ou multi-trajet) peut être évaluée sur une sous-porteuse, sur plusieurs sous-porteuses, sur un groupe de sous-porteuses (généralement un multiple de 12 sous-porteuses).

Pour un canal de type flat fading (en OFDM 4G, par exemple), la valeur du canal CHi peut se traduire par une simple amplitude, qui peut être quantifiable sur, par exemple, 8 bits, 16 bits, 32 bits, 64 bits, 128 bits ou 256 bits.

Le concept de sous-porteuse et variation du signal reçu sur une sous-porteuse est lié à la forme d'onde OFDM. Cette forme d'onde résulte d'un multiplexage par répartition orthogonale de la fréquence. La technologie OFDM à préfixe cyclique (CP-OFDM) est devenue le choix de prédilection pour la 4G.

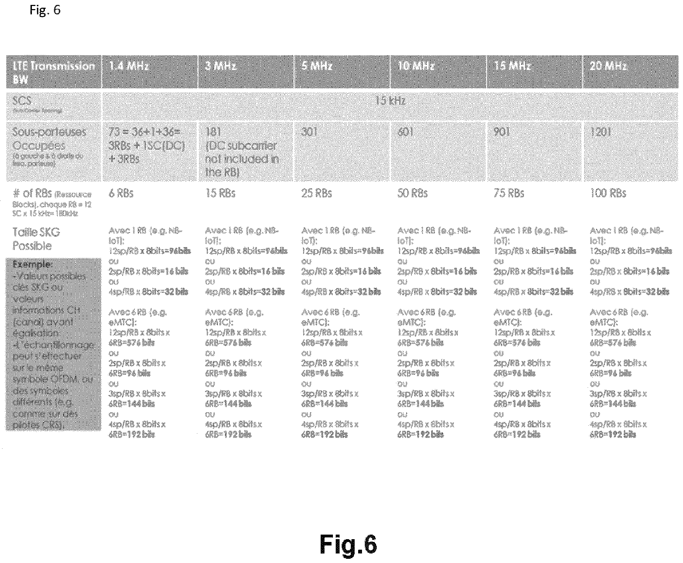

La figure 6 détaille une information SKG nécessaire avec une quantification sur 8 bits/sous-porteuse ou 8 bits/Sub-carrier SC selon l'invention.

A partir de ses mesures de canaux de propagation sur les émissions des stations de base de proximité (eNB1,..., eNBi, ..., eNBn), le terminal utilisateur UE peut déterminer des clés secrètes particulières SKGᵢ associées respectivement aux stations de base de proximité eNB1,..., eNBi, ..., eNBn. Ces différentes clés secrètes sont envoyées au réseau d'accès et puis vers le CN via le satellite Sat.

Préférentiellement, le terminal utilisateur UE est apte à déterminer une clé secrète globale SKG calculée à partir des différentes clés secrètes particulières SKGᵢ. Cette clé secrète globale SKG est, par exemple, une sommation ou une concaténation des différentes clés secrètes particulières SKGᵢ.

On notera que lorsque le terminal utilisateur UE transmet des clés secrètes particulières SKGᵢ, le réseau d'accès RAN (pour « Radio Access Network » en anglais) / le CN est apte à reconstituer une clé secrète globale SKG à partir desdites différentes clés particulières SKGᵢ.

L'utilisation de clés secrètes particuliers SKGᵢ ou d'une clé secrète globale SKG permet de limiter la quantité d'informations envoyée via le satellite Sat au réseau d'accès RAN / le CN.

Les stations de base de proximité eNB1,..., eNBi, ..., eNBn sont adaptées pour transmettre des troisièmes données de positionnement Pos3 vers le réseau central 4G CN, et plus particulièrement vers le module NGC. Cette transmission de troisièmes données de positionnement Pos3 se fait sans passer par le satellite Sat. Par exemple, les troisièmes données de positionnement Pos3 sont transmises au réseau central 4G via une fibre optique. Les troisièmes données de positionnement sont basées sur des mesures de canaux réalisées par les stations de base de proximité eNB1,..., eNBi, ..., eNBn sur les émissions du terminal utilisateur UE. Préférentiellement, chaque station de base de proximité eNB1,..., eNBi, ..., eNBn est adaptée pour calculer une clé secrète particulière SKG'ᵢ qu'elle envoie au réseau central 4G CN. En variante, une station de base de proximité peut recueillir l'ensemble des mesures de canaux réalisés par les stations de base de proximité et calculer une clé secrète globale SKG' correspondant, par exemple, à une sommation ou à une concaténation des clés secrètes particulières SKG'ᵢ. Cette clé secrète globale SKG' est ensuite transmise au réseau central 4G CN.

Suite à la réception des secondes données de positionnement Pos2 et des troisièmes données de positionnement Pos3, le réseau central 4G CN est adapté pour comparer ces données. Il peut ainsi en vérifier la compatibilité. Par exemple, il peut comparer les clés secrètes particulières SKGᵢ, SKG'ᵢ. En variante, le réseau central 4G CN compare les clés secrètes générales SKG, SKG'. Si les données de positionnement Pos2 et Pos3 sont compatibles, le réseau central 4G CN valide les premières données de positionnement Pos1 du terminal utilisateur UE et le terminal peut continuer à utiliser le réseau 4G.

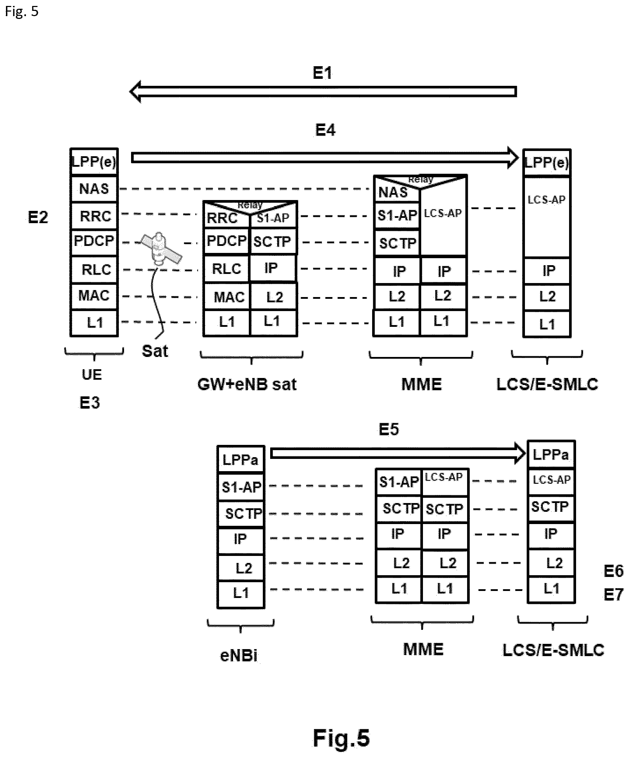

La figure 5 illustre les étapes d'un procédé de validation d'un positionnement d'un terminal utilisateur.

Dans une première étape E1, une entité E-SMLC (pour « Enhanced Serving Mobile Location Center » en anglais) envoie vers le terminal utilisateur UE un message indiquant un nombre de sources à mesurer.

Dans une seconde étape E2, le terminal utilisateur UE fait une sélection des sources les plus puissantes, c'est-à-dire des stations de base de proximité les plus proches du terminal utilisateur UE.

Dans une troisième étape E3, le terminal utilisateur UE détermine les secondes données de positionnement Pos2 à partir de mesures effectuées au niveau de la couche PHY (L1). Ce terminal utilisateur UE peut pour cela obtenir les différentes clés secrètes particulières SKGᵢ des différentes stations de base de proximité et les transmettre. En variante, il peut faire une opération sur ces clés secrètes particulières SKGᵢ, telle qu'une sommation, pour en déduire une clé secrète générale SKG.

Dans une quatrième étape, le terminal utilisateur UE transmet les secondes données de positionnement Pos2 par l'intermédiaire d'une couche LPP (pour « LTE Positioning Protocol » en anglais). Dans un mode de réalisation particulier, les secondes données de positionnement Pos2 sont transmises au réseau central 4G CN avec les données de positionnement Pos1.

Dans une cinquième étape, une des stations de base de proximité eNBi envoie les troisièmes données de positionnement Pos3. Pour rappel, ces troisièmes données de positionnement peuvent être des mesures canaux par la station de base de proximité eNBi sur les émissions du terminal utilisateur UE ou une clé secrète particulière SKG'ᵢ produite à partir de ces mesures.

A la réception des secondes données de positionnement Pos2 et des troisièmes données de positionnement Pos3, l'entité E-SMLC peut valider la position GNSS du terminal utilisateur UE dans une étape E6. Dans le cas où il n'y a pas de validation, le réseau 4G rejette le terminal utilisateur UE dans une étape E7.

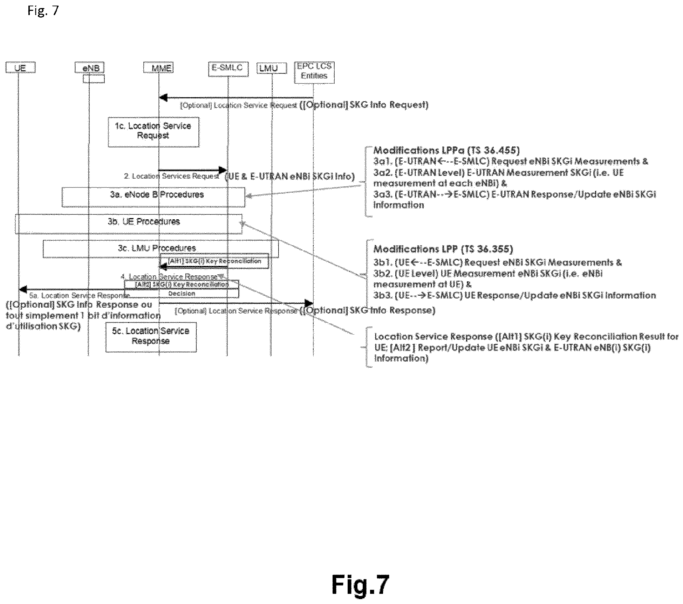

La figure 7 détaille différentes étapes d'un support de service de localisation par E-UTRAN selon l'invention. Dans ce mode de réalisation, le message peut être généré par des entités E-SMLC, MME. La décision peut être dans le MME et le E-SMLC. Le résultat peut être :
- un message Invalid Position ;
- Un message UE Rejection ;
- Un message UE Restriction ;
- Un message Valid Position ;
- Une décision de continuer la communication et pas de message.

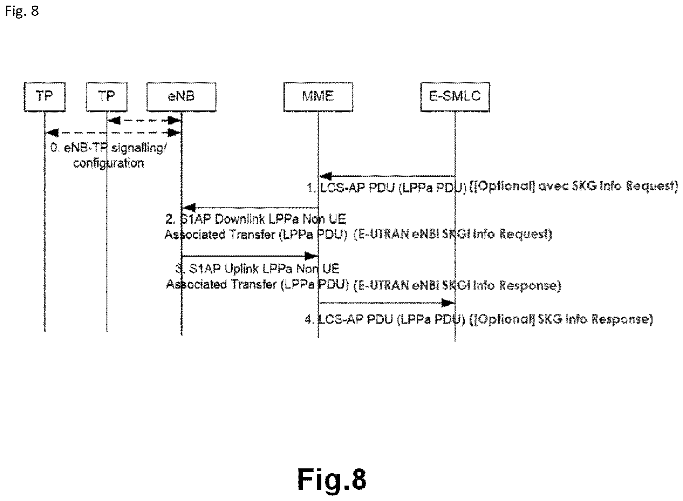

La figure 8 détaille les différentes étapes d'un transfert PDU LPPa entre un E-SMLC et un eNB pour obtenir des données eNB selon l'invention.

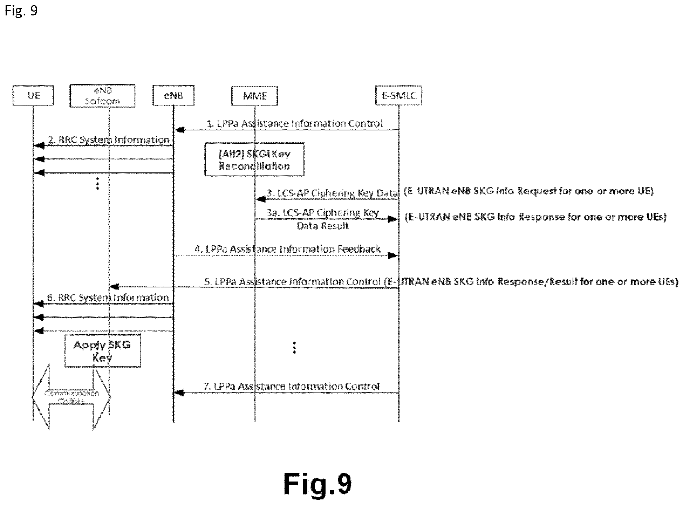

La figure 9 détaille les différentes étapes pour supporter l'émission en broadcast de données d'assistance.

L'invention propose ainsi :
- l'utilisation de clés SKG pour valider le positionnement géographique pour une connexion par satellite 4G ;
- les informations SKG sont ajoutées sur les protocoles LPP/LPPa ;
- il s'agit donc d'une utilisation SKG de deuxième ordre, pour valider les données GNSS transmises/la position obtenue par GNSS/les coordonnées géographiques transmises par le terminal utilisateur ;
- les clés SKG correspondent à une empreinte numérique ;
- le réseau central 4G CN compare les empreintes et décide si le terminal utilisateur UE va être accepté dans le réseau ou pas ;
- une fois que l'authentification de la position est réalisée, le terminal utilisateur et/ou le satellite et/ou la passerelle peuvent utiliser la clé SKG pour sécuriser le lien.

L'invention n'est pas limitée aux modes de réalisations décrits.

Ainsi, il est ainsi possible d'optimiser les résultats en fonction de qui est utilisé comme pilote/nombre de sous-porteuses et de la granulométrie/quantification nécessaire.

Ainsi, l'échange SKG peut être périodique ou apériodique.

Ainsi, en fonction de la bande passante, les configurations de tailles SKG peuvent varier.

Ainsi, l'invention est applicable en TDD si la voie montante et la voie descendante utilisent la même fréquence porteuse (canal réciproque UE->eNBi en UpLink ou eNBi ->UE en DownLink pour la détermination CHi, pour assurer une estimation de canal de propagation réciproque au niveau eNBi et au niveau UE et des générations de clés similaires) mais aussi potentiellement en FDD.

Ainsi, l'invention peut impliquer l'utilisation d'un e-SMLC (next-generation ou enhanced Serving Mobile Location Centre) et/ou GMLC (Gateway Mobile Location Centre), et/ou SLP (SUPL Location Platform, potentiellement utilisant un Subscriber LCS privacy Profile, pour un user-plane based solution) et utilisant un SUPL (Secure User Plane Location), et/ou LBS (location-based service) et/ou LCS (Location Service), et/ou protocoles LPP (LTE Positioning Protocol) & LPPa (LTE Positioning Protocol), qui sont des entités/services/protocoles spécifiques au niveau du réseau coeur. L'invention peut également utiliser une de ces entités/fonctions : MME (Mobility Management Entity), E-SMLC (Enhanced Serving Mobile Location Centre), etc.

L'invention peut s'appliquer également à des dispositifs type loT (Internet of Things en anglais) comme par exemple NB-loT (Narrow-Band loT) et MTC (Machine Type Communication) ou eMTC (enhanced Machine Type Communication), et potentiellement aussi à des dispositifs qui n'ont pas un module GNSS incorporé ou qui ne bénéficient pas d'un module GNSS actif.

Dans une alternative d'implémentation, la station de base de proximité peut être par exemple une macro cell, une small cell, une pico cell, une wide area BS ou tout autre type de BS (Base Station), ou un noeud IAB (Integrated Access Backhaul), un Remote Radio Head (RRH), un point de transmission (TP), un point d'accès ou un Access Point (AP) WiFi/WLAN de confiance.

Dans un autre exemple, au lieu d'utiliser le protocole LPP pour transmettre la clé secrète particulière SKGᵢ ou la clé secrète générale SKG, le UE peut utiliser un autre moyen de transmission voir par exemple le protocole RRC (pour « Radio Ressource Control » en anglais) pour transmettre la/les clés vers le eNB Satcom, et puis le eNB Satcom peut utiliser un protocole de type LPPa pour la transmissions des données SKG vers le CN/NGC et/ou vers E-SMLC/LCS.

Comme alternatives pour la réconciliation de clés et les alternatives possible, le message initial d'utilisation SKG peut être généré par exemple par le EPC, les entités LCS, le E-SMLC, le MME, eNB etc. ; la réconciliation de clés (Pos2, Pos3) peut s'effectuer par exemple au niveau E-SMLC, MME, etc. ; la décision qui concerne l'action effectué par le CN peut être par exemple au niveau MME, E-SMLC, etc. ; le résultat de la décision peut être par exemple un message de rejection UE (e.g. UE Rejection Message vers e.g. UE et/ou PCRF pour l'entité Policy and Charging Rules Function), de restriction UE (UE Restriction Message vers e.g. E-UTRAN et/ou PCRF), un message de position invalide (e.g. Invalid Position Message vers e.g. E-SMLC ou EPC LCS ou autre(s) entité(s) CN), un message de position valide (e.g. vers les entités E-SMLC ou EPC LCS), une décision de continuer la communication et sans aucun message transmis vers les différentes entités CN/RAN/UE.

D'autres alternatives d'implémentation peuvent utiliser un message NAS avec une clé secrète SKG ou le résultat de la réconciliation de clés (e.g. une clé secrète SKG globale) entre le MME et l'UE ou e.g. un message REGISTRATION ACCEPT. MME peut également communiquer la clé secrète SKG au E-UTRAN dans un message de type S1-AP avec le résultat de la réconciliation de clés (e.g. une clé secrète SKG globale) ou e.g. un message UE CONTEXT MODIFICATION REQUEST avec le champ Security Key IE égal e.g. à la clé/à une clé secrète SKG globale. Optionnellement, l'invention peut implémenter la sécurisation/le chiffrage du lien entre le UE et le réseau d'accès satellite avec la clé secrète SKG. Le chiffrage/la sécurisation du lien peut s'effectuer dans un seul sens ou dans les deux sens de communication.

Ainsi, pour mesurer les canaux CHi, l'invention peut utiliser les pilotes suivants (exemples non-restrictifs): Demodulation Reference Signals (DM-RS), Sounding Reference Signals (SRS), Channel State Information Reference Signals (CSI-RS), Positioning Reference Signals (PRS), Tracking Reference Signals (TRS), Cell-specific Reference Signals (CRS), PSS/SSS (Primary/Secondary Synchronization Signals) and potentiellement d'autres comme les préambules PRACH ou autre type de signal émis par le UE ou le eNB.

Ainsi si la clé secrète particulière SKGᵢ ou la clé secrète générale SKG est la même pour plusieurs utilisateurs dans le réseau, le eNB Satcom peut appliquer la même clé SKG pour plusieurs terminaux utilisateurs UEs.

Ainsi, le eNB Satcom peut diffuser en broadcast de l'information avec la même clé SKG vers plusieurs terminaux utilisateurs UEs.

Le MME peut utiliser le LOCATION SERVICE RESPONSE pour directement informer les terminaux utilisateurs UEs avec la clé secrète générale SKG ou avec l'information que la méthode SKG va être utilisée par le eNB Satcom.

Le réseau peut utiliser le protocole LPP (TS 36.355) pour transmettre (en utilisant eNB ou eNB Satcom) un résultat SKG à appliquer par le terminal utilisateur UE pour chiffrer la communication entre le terminal utilisateur et le eNB Satcom.

Le chiffrement peut être unidirectionnel (UpLink UE vers eNB Satcom ou DownLink eNB Satcom vers UE) ou bidirectionnel (UpLink et DownLink).

Le terminal utilisateur UE et les stations de base de proximité peuvent déterminer les données de positionnement (Pos2, respectivement Pos3) à partir de mesures effectuées au niveau de la couche PHY (L1), après le traitement FFT/DFT (FFT si transformée Fourier directe rapide ou « Fast Fourier Transform » en anglais, DFT si transformée Fourier discrète ou « Discrète Fourier Transform » en anglais) en réception, et préférablement avant l'égalisation du canal radio. ».

## Revendications

1. Procédé de validation d'un positionnement d'un terminal utilisateur (UE) compatible 4G dans un réseau de cellules 4G, ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 4G (CN), chaque cellule 4G du réseau de cellules 4G comprenant une station de base, chaque station de base étant apte à communiquer avec le réseau central 4G (CN), ledit terminal utilisateur (UE) étant apte à communiquer à un instant donné avec plusieurs stations de base des cellules 4G, dites stations de base de proximité (eNB1,..., eNBi, ..., eNBn), ledit procédé de validation comprenant :
- une étape de détermination de premières données de positionnement (Pos1) du terminal utilisateur (UE), lesdites premières données de positionnement (Pos1) étant une position GNSS du terminal utilisateur (UE), lesdites premières données de positionnement (Pos1) étant envoyées par le terminal utilisateur (UE) au réseau central 4G via le satellite (Sat) ;
- une étape d'envoi par le terminal utilisateur (UE) de secondes données de positionnement (Pos2) du terminal utilisateur (UE) vers le réseau central 4G, lesdites secondes données de positionnement (Pos2) étant basées sur tout ou partie des mesures canaux de réalisées par le terminal utilisateur (UE) sur les stations de base de proximité (eNB1,..., eNBi, ..., eNBn), ladite étape d'envoi étant réalisée via le satellite (Sat) ;
- une étape d'envoi par les stations de base de proximité (eNB1,..., eNBi, ..., eNBn) de troisièmes données de positionnement (Pos3) du terminal utilisateur (UE) vers le réseau central 4G, lesdites troisièmes données de positionnement étant basées sur des mesures de canaux réalisées par les stations de base de proximité (eNB1,..., eNBi, ..., eNBn) sur les émissions du terminal utilisateur (UE), ladite étape d'envoi étant réalisée sans passer par le satellite (Sat) ;
- une étape de comparaison, dans le réseau central 4G, des secondes données de positionnement (Pos2) avec les troisièmes données de positionnement (Pos3), les premières données de positionnement (Pos1) du terminal utilisateur (UE) étant validées si les secondes données de positionnement (Pos2) sont compatibles avec les troisièmes données de positionnement (Pos3).

2. Procédé de validation selon la revendication 1, dans lequel les secondes données de positionnement sont des mesures par le terminal utilisateur (UE) des canaux de propagation réalisées sur les émissions des stations de base de proximité (eNB1,..., eNBi, ..., eNBn).

3. Procédé de validation selon la revendication 1, dans lequel les secondes données de positionnement sont des clés secrètes particulières (SKGᵢ) générées par le terminal utilisateur (UE), lesdites clés secrètes particulières (SKGᵢ) étant calculées à partir de mesures des canaux de propagation réalisées par le terminal utilisateur (UE) sur les stations de base de proximité (eNB1,..., eNBi, ..., eNBn).

4. Procédé de validation selon la revendication 3, dans lequel les secondes données de positionnement sont une clé secrète globale SKG calculée à partir des clés secrètes particulières (SKGᵢ).

5. Procédé de validation selon l'une quelconque des revendications 1 à 4, dans lequel les troisièmes données de positionnement sont les mesures des canaux de propagation réalisées par les stations de base de proximité (eNB1,..., eNBi, ..., eNBn) sur les émissions du terminal utilisateur (UE).

6. Procédé de validation selon l'une quelconque des revendications 1 à 4, dans lequel les troisièmes données de positionnement sont des clés secrètes particulières SKG'ᵢ générées par les stations de base de proximité (eNB1,..., eNBi, ..., eNBn), lesdites clés secrètes étant calculées à partir des mesures des canaux de propagation réalisées par lesdites stations de proximité (eNB1,..., eNBi, ..., eNBn) sur les émissions du terminal utilisateur (UE).

7. Procédé de validation selon la revendication 6, dans lequel les troisièmes données de positionnement sont une clé secrète globale SKG' de station de base calculées à partir des clés secrètes particulières (SKG'ᵢ).

8. Procédé de validation selon les revendications 6 ou 7, dans lequel les clés secrètes (SKGᵢ, SKG'ᵢ) sont ajoutées sur des protocoles LPP et LPPa dans leur transmission au réseau central 4G.

9. Procédé de validation selon l'une quelconque des revendications 1 à 8, dans lequel ledit procédé comprend initialement une étape d'authentification du terminal utilisateur (UE) dans le réseau central 4G (CN).

10. Système de communication 4G comprenant :
- un réseau radio cellulaire 4G, chaque cellule dudit réseau 4G comprenant au moins une station de base chaque station de base étant adaptée pour communiquer avec un terminal utilisateur (UE) compatible 4G ;
- un satellite (Sat), ledit satellite (Sat) étant adaptée pour échanger des trames de service (T_{S}) avec le terminal utilisateur (UE) ;
- une passerelle (GW), ladite passerelle (GW) étant adaptée pour échanger des trames lien feeder (T_{LF}) avec le satellite (Sat) ;
- un réseau central 4G (CN), ledit réseau central (CN) étant relié à la passerelle (GW), ledit réseau central (CN) étant apte à communiquer avec les stations de base ;
- ledit terminal utilisateur (UE) étant apte à communiquer à un instant donné avec plusieurs stations de base, dites stations de base de proximité (eNB1,..., eNBi, ..., eNBn) ;
ledit système de communication 4G (1) étant apte à mettre en oeuvre les étapes d'un procédé de validation d'un positionnement du terminal utilisateur (UE) dans le réseau de cellules 4G, selon l'une quelconque des revendications 1 à 9.

11. Procédé d'échange de premières données de positionnement (Pos1) et de secondes données de positionnement (Pos2) destiné à être mis en oeuvre par un terminal utilisateur (UE) compatible 4G pour une validation d'un positionnement dudit terminal utilisateur (UE) dans un réseau radio cellulaire 4G, ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 4G (CN), chaque cellule 4G du réseau radio cellulaire 4G comprenant au moins une station de base, chaque station de base étant apte à communiquer avec le réseau central 4G (CN), ledit terminal utilisateur (UE) étant apte à communiquer à un instant donné avec plusieurs stations de base, dites stations de base de proximité (eNB1,..., eNBi, ..., eNBn), ledit procédé d'échange de données comprenant :
- une étape de détermination des premières données de positionnement (Pos1) du terminal utilisateur (UE), lesdites premières données de positionnement (Pos1) étant une position GNSS du terminal utilisateur (UE), lesdites premières données de positionnement (Pos1) étant envoyées par le terminal utilisateur (UE) au réseau central 4G via le satellite (Sat) ;
- une étape d'envoi par le terminal utilisateur (UE) des secondes données de positionnement (Pos2) du terminal utilisateur (UE) vers le réseau central 4G, lesdites secondes données de positionnement (Pos2) étant basées sur tout ou partie de mesures canaux réalisées par le terminal utilisateur (UE) sur les stations de base de proximité (eNB1,..., eNBi, ..., eNBn), ladite étape d'envoi étant réalisée via le satellite (Sat), lesdites secondes données de positionnement (Pos2) étant aptes à être comparées à des troisièmes données de positionnement (Pos3), lesdites troisièmes données de positionnement (Pos3) étant adaptées pour être envoyées par les stations de base de proximité (eNB1,..., eNBi, ..., eNBn) sans passer par le satellite (Sat), lesdites troisièmes données de positionnement (Pos3) étant basées sur des mesures de canaux réalisées par les stations de base de proximité (eNB1,..., eNBi, ..., eNBn) sur les émissions du terminal utilisateur (UE), les premières données de positionnement (Pos1) du terminal utilisateur (UE) étant validées si les secondes données de positionnement (Pos2) sont compatibles avec les troisièmes données de positionnement (Pos3).

12. Terminal utilisateur compatible 4G, ledit terminal utilisateur (UE) étant apte à mettre en oeuvre les étapes d'un procédé d'échange de premières données de positionnement (Pos1) et de secondes données de positionnement (Pos2) de la revendication 11 pour une validation d'un positionnement dudit terminal utilisateur (UE) dans un réseau radio cellulaire 4G.

13. Programme d'ordinateur comportant des instructions exploitables par un terminal utilisateur (UE) compatible 4G selon la revendication 12, qui lorsqu'elles sont exécutées ou interprétées par ledit terminal utilisateur (UE) déclenchent la mise en oeuvre d'un procédé d'échange de première données de positionnement (Pos1) et de secondes données de positionnement (Pos2) selon la revendication 11 pour une validation d'un positionnement dudit terminal utilisateur (UE) dans un réseau radio cellulaire 4G.

14. Procédé d'échanges de troisièmes données de positionnement (Pos3) destiné à être mis en oeuvre par une station de base pour une validation d'une positionnement d'un terminal utilisateur (UE) compatible 4G dans un réseau radio cellulaire 4G, ladite station de base, dite station de base de proximité étant apte à communiquer à un instant donné avec ledit terminal utilisateur (UE), ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 4G (CN), la station de base étant apte à communiquer avec ledit réseau central 4G (CN), ledit procédé d'échange de données comprenant :
- une étape d'envoi de troisièmes données partielles de positionnement (Pos31, ..., Pos3i, ..., Pos3n) vers le réseau central 4G (CN) sans passer par le satellite (Sat), lesdites troisièmes données de positionnement étant basées sur des mesures de canaux réalisées par la station de base de proximité sur les émissions du terminal utilisateur (UE), lesdites troisièmes données partielles de positionnement étant adaptées pour être combinées avec des troisièmes données partielles de positionnement (Pos31, ..., Pos3i, ..., Pos3n) basées sur des mesures canaux réalisées par les stations de base de proximité (eNB1,..., eNBi, ..., eNBn) sur les émissions du terminal utilisateur (UE) à l'instant donné pour former des troisièmes données de positionnement (Pos3), lesdites troisièmes données de positionnement (Pos3) étant adaptées pour être comparées avec de secondes données de positionnement (Pos2), lesdites secondes données de positionnement ayant été envoyées par le terminal utilisateur (UE) vers le réseau central 4G (CN) via le satellite (Sat), lesdites secondes données de positionnement (Pos2) étant basées sur les mesures canaux réalisées par le terminal utilisateur (UE) sur les stations de base de proximité (eNB1,..., eNBi, ..., eNBn), les premières données de positionnement (Pos1) du terminal utilisateur (UE) dans le réseau cellulaire 4G étant validées si les secondes données de positionnement (Pos2) sont compatibles avec les troisièmes données de positionnement (Pos3), lesdites premières données de positionnement (Pos1) étant une position GNSS du terminal utilisateur (UE), lesdites premières données de positionnement (Pos1) étant envoyées par le terminal utilisateur (UE) au réseau central 4G via le satellite (Sat).

15. Station de base apte à mettre en oeuvre les étapes d'un procédé d'échanges de troisièmes données de positionnement (Pos3) selon la revendication 14 pour une validation d'un positionnement d'un terminal utilisateur (UE) dans un réseau radio cellulaire 4G.

16. Programme d'ordinateur comportant des instructions exploitables par une station de base (eNB1,..., eNBi, ..., eNBn) selon la revendication 15, qui lorsqu'elles sont exécutées ou interprétées par ladite station de base (eNB1,..., eNBi, ..., eNBn) déclenchent la mise en oeuvre d'un procédé d'échanges de troisièmes données de positionnement (Pos3) selon la revendication 14 pour une validation d'un positionnement d'un terminal utilisateur (UE) dans un réseau radio cellulaire 4G.

17. Procédé de traitement de premières données de positionnement (Pos1), de secondes données de positionnement (Pos2) et de troisième données de positionnement (Pos3) d'un terminal utilisateur (UE) compatible 4G dans un réseau radio cellulaire 4G, ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 4G (CN), chaque cellule 4G du réseau radio cellulaire 4G comprenant une station de base, chaque station de base étant apte à communiquer avec le réseau central 4G (CN), ledit terminal utilisateur (UE) étant apte à communiquer à un instant donné avec plusieurs stations de base des cellules 4G, dites stations de base de proximité (eNB1,..., eNBi, ..., eNBn), ledit procédé de traitement comprenant :
- une étape de réception des premières données de positionnement (Pos1) du terminal utilisateur (UE), lesdites premières données de positionnement (Pos1) étant une position GNSS du terminal utilisateur (UE), lesdites premières données de positionnement (Pos1) étant envoyées par le terminal utilisateur (UE) via le satellite (Sat) ;
- une étape de réception de secondes données de positionnement (Pos2) du terminal utilisateur (UE), lesdites secondes données de positionnement (Pos2) étant basées sur tout ou partie de mesures de canaux réalisées par le terminal utilisateur (UE) sur les stations de base de proximité (eNB1,..., eNBi, ..., eNBn), lesdites secondes données de positionnement (Pos2) étant envoyées par le terminal utilisateur (UE) via le satellite (Sat) ;
- une étape de réception de troisièmes données de positionnement (Pos3), lesdites troisièmes données de positionnement étant basées sur des mesures de canaux réalisées par les stations de base de proximité (eNB1,..., eNBi, ..., eNBn) sur les émissions du terminal utilisateur (UE), ladite étape d'envoi étant réalisée par les stations de base de proximité (eNB1,..., eNBi, ..., eNBn) sans passer par le satellite (Sat) ;
- une étape de comparaison des secondes données de positionnement (Pos2) avec les troisièmes données de positionnement (Pos3), les premières données de positionnement (Pos1) du terminal utilisateur (UE) étant validées si les secondes données de positionnement (Pos2) sont compatibles avec les troisièmes données de positionnement (Pos3).

18. Réseau d'accès (RAN) et réseau central 4G (CN) apte à mettre en oeuvre les étapes d'un procédé de traitement de données de positionnement (Pos1, Pos2, Pos3) selon la revendication 17 pour une validation d'un positionnement d'un terminal utilisateur (UE) dans un réseau radio cellulaire 4G.

19. Produit programme d'ordinateur comportant des instructions exploitables par un réseau d'accès (RAN) et/ou le réseau central 4G (CN) selon la revendication 18, qui lorsqu'elles sont exécutées ou interprétées par ledit réseau d'accès (RAN) et ledit réseau central 4G (CN) déclenchent la mise en oeuvre d'un procédé de traitement de données de positionnement (Pos1, Pos2, Pos3) selon la revendication 16 pour une validation d'un positionnement d'un terminal utilisateur (UE) dans un réseau radio cellulaire 4G.
